# EUROPÄISCHE PATENTSCHRIFT

(11) **EP 0 678 178 B1**
(45) Veröffentlichungstag und Bekanntmachung des Hinweises auf die Patenterteilung: **11.12.1996**
(21) Anmeldenummer: 94903873.1
(22) Anmeldetag: 24.12.1993
(51) Int. Cl.: F16K 17/30

(54) **SICHERHEITSSCHLIESSVORRICHTUNG FÜR GASLEITUNGEN**
SAFETY SHUT-OFF FOR GAS LINES
DISPOSITIF DE FERMETURE DE SURETE POUR CANALISATIONS DE GAZ

(30) Priorität: 09.01.1993 DE 4300432; 24.12.1993 DE 4344575; 24.12.1993 DE 9319910 U
(43) Veröffentlichungstag der Anmeldung: 25.10.1995
(73) Patentinhaber: Mertik Maxitrol GmbH & Co. KG, O-06484 Quedlinburg (DE)
(72) Erfinder: SCHULZE, Klaus, D-06507 Gernrode (DE); ALBRECHT, Günter, D-06502 Weddersleben (DE)
(74) Vertreter: Albrecht, Günter
(86) Internationale Anmeldenummer: EP9303686
(87) Internationale Veröffentlichungsnummer: WO9416255

(56) Entgegenhaltungen:
- EP-A- 0 268 520
- WO-A-92/01184
- DE-A- 1 600 685
- DE-U- 8 705 359
- DE-U- 8 815 392
- FR-A- 1 409 416
- FR-A- 2 299 186
- FR-E- 74 260
- GB-A- 556 863
- GB-A- 2 038 989
- GB-A- 2 101 702
- NL-C- 80 781
- US-A- 2 996 077
- US-A- 4 105 044
- US-A- 4 727 903
- US-A- 4 830 046

## Beschreibung

### Technisches Gebiet

Die Erfindung betrifft eine Sicherheitsschließvorrichtung für Gasleitungen mit einem Ventilkörper und einem Ventilsitz nach dem Oberbegriff des ersten Patentanspruches.

Derartige Sicherheitsschließvorrichtungen dienen dazu, bei Havarien, zum Beispiel bei Rohrbrüchen oder Schlauchrissen, die Gasleitung zu verschließen, um ein unkontrolliertes Ausströmen des Gases und damit eine Gefährdung zu verhindern.

### Stand der Technik

Es sind bereits Sicherheitsschließvorrichtungen bekannt geworden, welche zwischen der Zuleitung und einem Verbraucher angeordnet sind, und die sicherstellen sollen, daß zum Beispiel bei einem Rohrbruch oder bei einem Platzen eines Schlauches ein Verschließen der Zuleitung erfolgt.

So ist aus der US-PS 4,830,046 eine Sicherheitsschließvorrichtung bekannt, bei der in einem, beidseitig ein Anschlußgewinde aufweisenden Gehäuse ein als Kugel ausgebildeter Ventilkörper gegen einen Ventilsitz preßbar ist, wobei der Ventilkörper in Achsrichtung des Ventilsitzes entgegen der Kraft einer Feder in Schließrichtung verschiebbar ist. Während sich der Ventilkörper in Offenstellung unter der Einwirkung der Feder an einem Anschlag abstützt, wird er während seiner Schließbewegung nur durch diese Feder geführt.

Bei dieser Lösung ist es von Nachteil, daß einmal durch das als Anschlag für den Ventilkörper in Offenstellung dienende Einschraubteil, sowie auch durch eine zweite ebenfalls als Einschraubteil ausgebildete Auflage für die Feder Drosselstellen entstehen, die einen zusätzlichen Druckverlust erzeugen. Um die gewünschte Durchflußmenge zu gewährleisten muß somit ein größeres Bauvolumen in Kauf genommen werden. Damit ist es weiterhin von Nachteil, daß durch das Einfügen des Ventils in die Gasleitung zwei neue Dichtstellen zum Raum hin entstehen, und daß bei einer Kombination der Sicherheitsvorrichtung mit einer anderen Armatur, zum Beispiel einem Schlauchhahn, deren Baulänge vergrößert wird. Bei Nachrüstungen in vorhandene Anlagen ist es notwendig, die vorhandene Gasleitung entsprechend zu kürzen.

Auf Grund der Anschlußgewinde und der Einbauten ergibt sich somit ein insgesamt gesehen aufwendiges Gerät.

Eine weitere Sicherheitsschließvorrichtung ist in der WO 92/01184 beschrieben, die bei einer auftretenden Beschädigung des Rohrleitungssystems dieses verschließt, ohne jedoch ein vorzeitiges Verschließen der Zuleitung zu bewirken, wenn ein Verbraucher über einen längeren Zeitraum die seiner Leistung entsprechende Gasmenge benötigt. Bei dieser Sicherheitsschließvorrichtung ist ein Ventil als in Achsrichtung eines rohrförmigen Gehäuses verschiebliches Tellerventil entgegen der Kraft einer Feder verschiebbar gelagert. Dazu sind Scheiben mit mittiger Lagerstelle für das Tellerventil in das Gehäuse eingebracht, die an ihrem Umfang Durchbrüche für die Gasströmung aufweisen. Das Gehäuse besitzt an beiden stirnseitigen Enden Gewinde zur Verbindung mit der Rohrleitung oder anderen Armaturen.

Bei dieser Lösung ist es von Nachteil, daß die Bewegung des Ventiltellers durch Lagerstellen geführt wird. Da die für die Schließbewegung im Havariefall zur Verfügung stehenden Druckkräfte, die dann auf den Ventilteller wirken, nur wenige Millibar betragen, ist die Kraft der Feder, welche den Durchflußwert, bei dem die Sicherheitsschließvorrichtung ansprechen soll, bestimmt, außerordentlich gering. Jede Lagerreibung verfälscht diesen Durchflußwert erheblich und nicht reproduzierbar.

Besondes schwerwiegend ist dieser Nachteil unter Berücksichtigung dessen, daß das Ventil im Normalbetrieb nicht betätigt und somit auch keine Bewegung des Ventilschaftes innerhalb der Lager erfolgt, die der Verschmutzung durch den Gasstrom ausgesetzt sind. Der Einsatz solcher Sicherheitsschließvorrichtungen ist jedoch u.a. bei Gasleitungen vorgesehen, welche im Erdreich verlegt werden, was bedeutet, daß sie auch über einen längeren Zeitraum, zum Beispiel mehrere Jahrzehnte, ohne Wartung ihre Sicherheitsfunktion behalten müssen,

Weiterhin ist es von Nachteil, daß durch das Einfügen des Ventils in die Gasleitung zwei neue Dichtstellen zum Raum hin entstehen, und daß bei einer Kombination der Sicherheitsvorrichtung mit einer anderen Armatur, zum Beispiel einem Schlauchhahn, deren Baulänge vergrößert wird. Bei Nachrüstungen in vorhandene Anlagen ist es notwendig, die vorhandene Gasleitung entsprechend zu kürzen.

Die durchbrochenen Scheiben, die zur Lagerung des Tellerventils dienen, erzeugen desweiteren einen zusätzlichen Druckverlust.

Auf Grund der Anschlußgewinde und der Einbauten ergibt sich somit auch bei dieser Lösung ein insgesamt gesehen aufwendiges Gerät.

### Darstellung der Erfindung

Der Erfindung liegt das Problem zugrunde, eine Sicherheitsschließvorrichtung für Gasleitungen zu schaffen, bei der der Vorteil der reibungs- und wartungsfreien Lagerung des Ventilkörpers beibehalten sein soll, und die nur einen minimalen Strömungswiderstand verursacht. Desweiteren soll die Sicherheitsschließvorrichtung ohne nach außen dichtende Verbindungen auskommen. Sie soll leicht montierbar und in vorhandene Gasleitungen oder Armaturen ohne deren Änderung nachrüstbar sein.

Erfindungsgemäß wird das Problem dadurch gelöst, daß der Ventilkörper ein auf der Feder frei schwebender Teller ist, der sich in Offenstellung gegen einen in radialer Richtung elastisch verformbaren Anschlag abstützt, der in eine Nut eingeschnappt ist, die vorzugsweise einstückig mit dem Ventilsitz verbunden ist. Durch das äußerst geringe Gewicht hat diese Lösung insbesondere den Vorteil, daß die in Abhängigkeit von der Einbaulage auftretende Masseeinwirkung, die zum Beispiel Einfluß auf die Auslenkung und die Kräftebilanz und 0 somit auch auf den Schließvorgang hat, sehr gering gehalten ist.

Vorteilhafte Ausgestaltungen der Erfindung gehen aus den weiteren Patentansprüchen hervor.

Dabei kann der Anschlag zum Beispiel durch eine Spreizfeder oder einen geschlitzten Kreisring, der vorzugsweise drei auf dem Umfang gleichmäßig verteilte radial nach innen ragende Stege aufweist, gebildet werden, wodurch der Strömungsquerschnitt nur unwesentlich verringert wird.

Damit ohne eine Veränderung des Strömungsquerschnittes eine Justierung ermöglicht wird, erweist es sich als vorteilhaft, wenn die Auflageschulter des dem Ventilkörper abgewandten Endes der Feder in Achsrichtung stellbar ist, indem sie zum Beispiel mittels eines Gewindes mit dem Ventilsitz verbunden ist. Durch diese verstellbare Auflageschulter ist eine Justagemöglichkeit der Sicherheitsschließvorrichtung gefunden, die ohne eine Veränderung des Strömungsquerschnittes auskommt.

Insbesondere für den Einsatz in Verbindung mit einem handelsüblichen Gasabsperrhahn ist es von Vorteil, wenn die Sicherheitsschließvorrichtung in den Gaseingang des Gasabsperrhahnes eingesetzt wird, wobei der Teller der Sicherheitsschließvorrichtung an seiner der Feder zugewandten Seite in axialer Richtung einen zapfenförmigen Fortsatz aufweist, der bei geschlossener Sicherheitsschließvorrichtung aus derselben hervorragt, sich hingegen bei Offenstellung der Sicherheitsschließvorrichtung innerhalb derselben befindet. Es ist natürlich auch möglich daß der Ventilsitz einstückig mit dem Gaseingang des Gasabsperrhahnes ausgeführt ist. Dabei befindet sich die Sicherheitsschließvorrichtung so weit im Gaseingang, daß der zapfenförmige Fortsatz bei geschlossener Sicherheitsschließvorrichtung in den Schwenkbereich des Schließorgans des Gasabsperrhahnes hineinragt. Bei dieser Lösung kann die Sicherheitsschließvorrichtung vollkommen dicht schließen. Eine Leckflußbohrung zum automatischen Wiederöffnen der Sicherheitsschließvorrichtung ist nicht erforderlich. Mit Schließen des Gasabsperrhahnes, was bei der Behebung von Havarien, zum Beispiel dem Auswechseln eines Schlauches, regelmäßig immer der Fall ist, wird der zapfenförmige Fortsatz in Achsrichtung verschoben, wodurch die Sicherheitsschließvorrichtung wieder geöffnet wird, so daß das Gas nach dem nach Beseitigung der Havarie erfolgten Öffnen des Gasabsperrhahnes wieder strömen kann.

### Ausführungsbeispiel

Die Erfindung wird nachstehend an einem Ausführungsbeispiel näher beschrieben. Es zeigen:
- Fig. 1: eine Sicherheitsschließvorrichtung für Gasleitungen in Offenstellung in geschnittener Darstellung,
- Fig. 2: eine Sicherheitsschließvorrichtung für Gasleitungen in Schließstellung in geschnittener Darstellung,
- Fig. 3: eine Sicherheitsschließvorrichtung für Gasleitungen vor der Montage des elastischen Abdichtelementes,
- Fig. 4: eine Sicherheitsschließvorrichtung für Gasleitungen in einer anderen Ausführung in Offenstellung in geschnittener Darstellung,
- Fig. 5: eine Ansicht A der Sicherheitsschließvorrichtung aus Fig. 4,
- Fig. 6: eine Sicherheitsschließvorrichtung für Gasleitungen in einer weiteren Ausführung ohne elastisches Abdichtelement in Offenstellung in geschnittener Darstellung,
- Fig. 7: eine erfindungsgemäße Sicherheitsschließvorrichtung für Gasleitungen in einer weiteren Ausführung mit einem frei schwebenden Ventilkörper (6) in Offenstellung in geschnittener Darstellung,
- Fig. 8: eine Ansicht B der erfindungsgemäßen Sicherheitsschließvorrichtung aus Fig. 7,
- Fig. 9: eine Ansicht B der erfindungsgemäßen Sicherheitsschließvorrichtung aus Fig. 7 mit einem verändertem Anschlag für die Feder,
- Fig.10: eine justierbare erfindungsgemäße Sicherheitsschließvorrichtung für Gasleitungen in einer weiteren Ausführung in Offenstellung in geschnittener Darstellung,
- Fig.11: eine in den Gaseingang eines Gasabsperrhahnes eingesetzte erfindungsgemäße Sicherheitsschließvorrichtung für Gasleitungen in Schließstellung,
- Fig.12: eine in den Gaseingang eines Gasabsperrhahnes integrierte erfindungsgemäße Sicherheitsschließvorrichtung für Gasleitungen in durch den Gasabsperrhahn erzwungener Offenstellung,
- Fig.13: eine in eine Elektroschweißmuffe eingesetzte erfindungsgemäße Sicherheitsschließvorrichtung für Gasleitungen in Offenstellung,
- Fig.14: eine in eine Elektroschweißmuffe integrierte erfindungsgemäße Sicherheitsschließvorrichtung für Gasleitungen in Schließstellung,
- Fig.15: ein Anschlag für die Verwendung in einer Elektroschweißmuffe

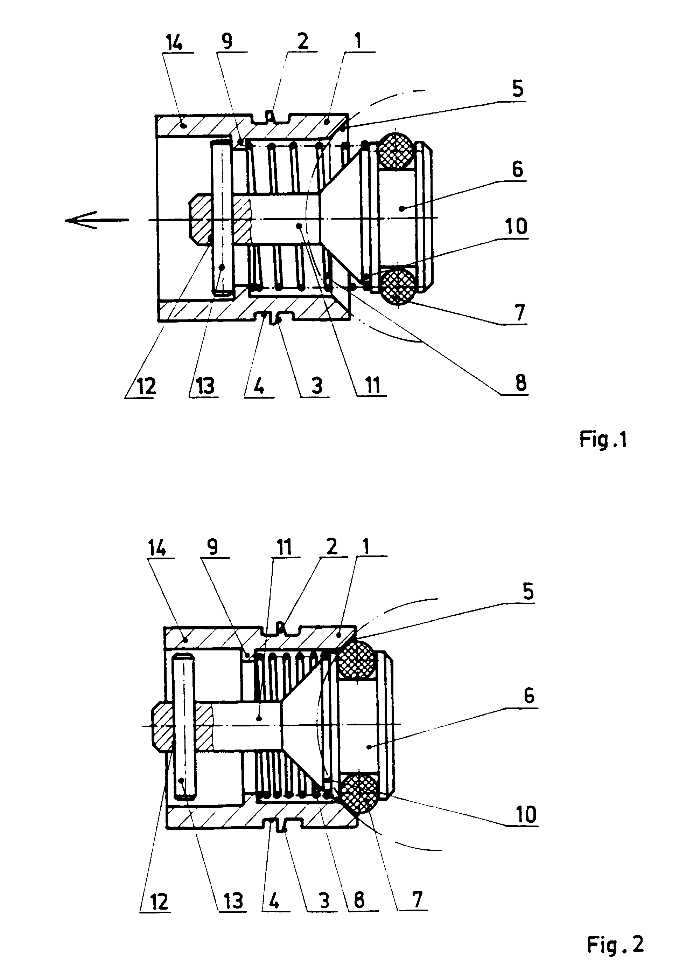

Dabei handelt es sich bei den in Fig. 1 bis 6 dargestellten und weiter unten näher erläuterten Ausführungsbeispielen nicht um die Erfindung an sich, sondern um zusätzliche Informationen zur näheren Erläuterung der dann beschriebenen erfindungsgemäßen Sicherheitsschließvorrichtung für Gasleitungen. Die in der Fig. 1 dargestellte Sicherheitsschließvorrichtung für Gasleitungen besteht aus einem rohrförmigen Ventilsitz 1, der an seinem Außendurchmesser, der ansonsten kleiner als der Innendurchmesser einer in verschiedenen Figuren nicht dargestellten Gasleitung 26 ist, einen Ringsteg 2 aufweist, dessen Durchmesser wiederum größer ist, als der Innendurchmesser der Gasleitung 26. Um ein leichteres Einpressen der Sicherheitsschließvorrichtung in die Gasleitung 26 zu gewährleisten, ist der Ringsteg 2 vorteilhafterweise mit einer Einführungsschräge 3 versehen. Desweiteren erweist es sich als günstig, wenn der Ventilsitz 1 beidseitig des Ringsteges 2 eine umlaufende Rille 4 aufweist, um mittels der vergrößerten Höhe des Ringsteges 2 eine bessere Elastizität zu erreichen.

An seiner, entgegen der durch einen Pfeil dargestellten Strömungsrichtung befindlichen Stirnseite befindet sich eine in Form einer Hohlkugel ausgebildete Dichtfläche 5. Im Inneren des Ventilsitzes 1 ist ein in axialer Richtung beweglicher Ventilkörper 6 angeordnet, der eine ringförmige Aufnahme für einen als elastisches Abdichtelement dienenden Rundring 7 besitzt. Dabei sind der Ventilkörper 6 und der Rundring 7 maßlich so festgelegt, daß der Außendurchmesser des Ventilkörpers 6 ohne dem Rundring 7 kleiner ist als der ihm zugeordnete Innendurchmesser des Ventilsitzes 1, während der Außendurchmesser des Ventilkörpers 6 mit montiertem Rundring 7 größer als dieser Innendurchmesser ist.

Auf der in Strömungsrichtung befindlichen Seite des Ventilkörpers 6 stützt sich eine den Ventilkörper 6 in Offenstellung haltende vorzugsweise als Druckfeder ausgebildete Feder 8 ab, die sich mit ihrem anderen Ende an einer umlaufenden Schulter 9 abstützt, die sich an den, dem Ventilkörper 6 zugeordneten Innendurchmesser des Ventilsitzes 1 anschließt.

Zur Führung der Feder 8 besitzt der Ventilkörper 6 einen umlaufenden Bund 10, an den sich in Strömungsrichtung ein Zapfen 11 anschließt. An seinem Ende weist der Zapfen 11 eine Durchgangsbohrung 12 auf, die zur Aufnahme eines Sperrelementes 13, in diesem Fall eines Stiftes, dient (Fig. 1).

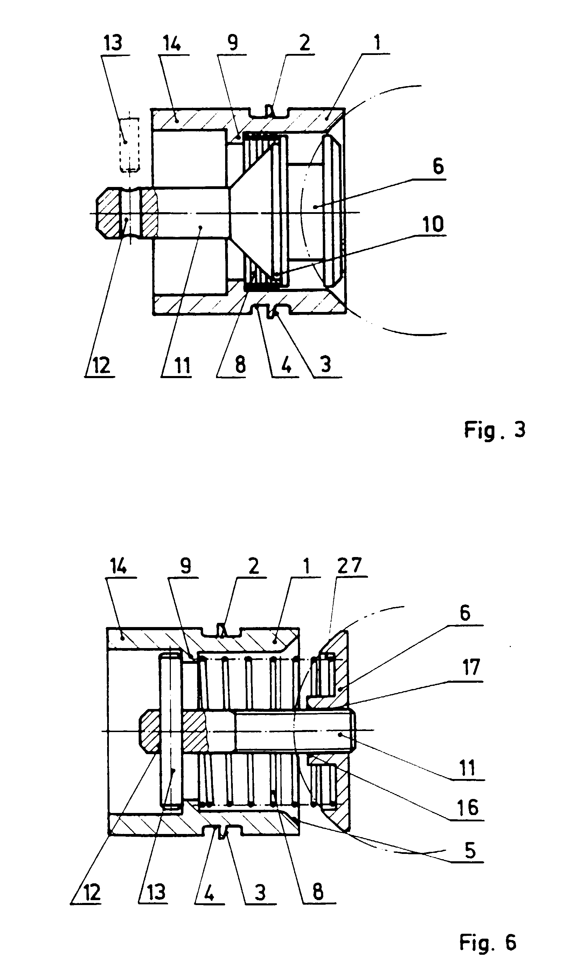

Zwischen der Länge des Zapfens 11 und der Länge des sich an die Schulter 9 anschließenden ebenfalls rohrförmigen Endstücks 14 des Ventilsitzes 1 besteht die Beziehung, daß das Sperrelement 13 bei montiertem Rundring 7 und in Schließstellung der Sicherheitsschließvorrichtung (Fig. 2) dieses rohrförmige Endstück 14 nicht verläßt, wohingegen bei fehlendem Rundring 7 der Ventilkörper 6 so weit in den Ventilsitz 1 hineingedrückt werden kann, daß das Sperrelement 13 aus dem Endstück 14 herausragt (Fig. 3).

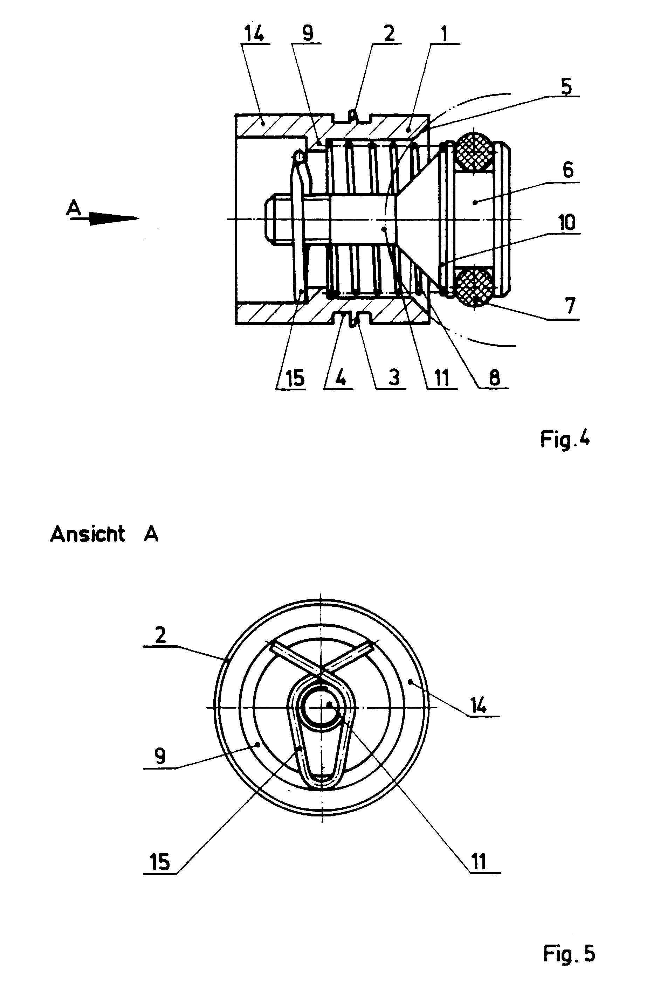

Eine etwas andere Ausführung ist in Fig. 4 dargestellt. Hierbei ist der Zapfen 11 mit Gewinde versehen, und als Sperrelement 13 dient ein Drahtbügel 15, der so gestaltet ist, daß er auf den Zapfen 11 aufgeschraubt werden kann (Fig. 5).

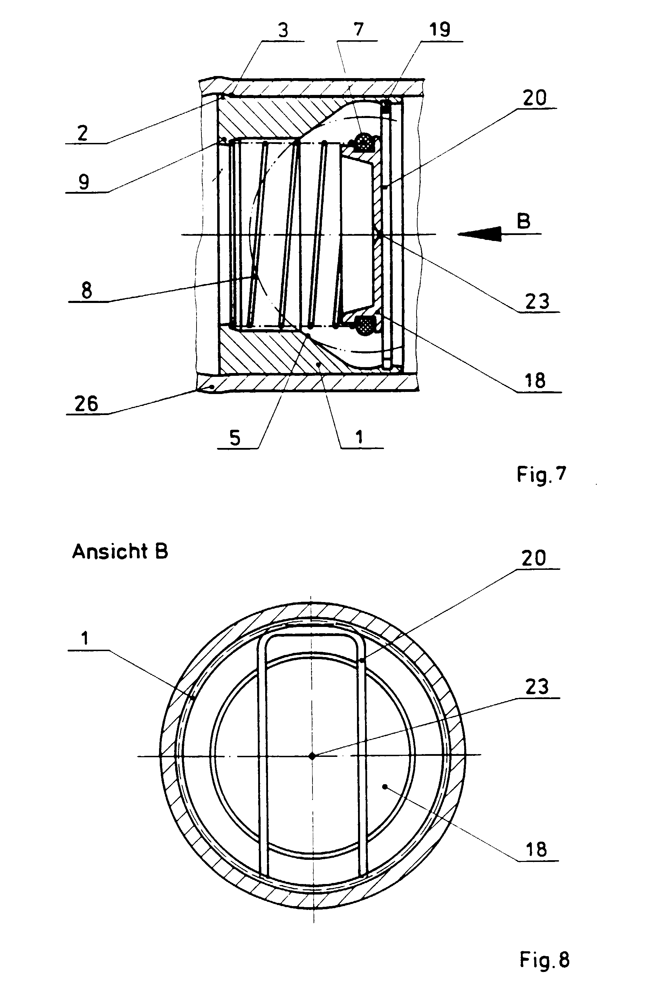

In Fig. 6 ist eine weitere Ausführung dargestellt. Diese Lösung unterscheidet sich dadurch von den vorhergehenden, daß der Ventilkörper 6 und der Zapfen 11 aus zwei separaten Teilen bestehen, wobei der Ventilkörper 6 eine axiale mit Gewinde versehene Bohrung 16 aufweist, mit der er auf dem in Strömungsrichtung befindlichen Gewindezapfen 11 aufgeschraubt ist, auf dem das sich an der Schulter 9 des Ventilsitzes 1 abstützende Sperrelement 13 starr befestigt ist. Um die notwendige Abdichtung und gleichzeitig eine Verdrehhemmung zu gewährleisten, befindet sich zwischen dem Zapfen 11 und der Bohrung 16 ein fachübliches Mittel, wie zum Beispiel in diesem Fall ein handelsübliches PTFE-Band 17. Auf ein elastisches Abdichtelement wurde bei dieser Ausführung verzichtet. Zur Erreichung der gewünschten Dichtheit wurde der Ventilkörper 6 kugelförmig gestaltet, während die Dichtfläche 5 als Schräge ausgeführt ist. Zur Aufnahme der Feder 8 und gleichzeitig zur Masseverringerung weist der Ventilkörper 6 desweiteren eine Ausdrehung 27 auf.

Bei einer in Fig. 7 dargestellten erfindungsgemäßen Sicherheitsschließvorrichtung ist der sich am Ende des Ventilsitzes 1 befindliche Ringsteg 2 bedeutend stärker ausgerührt, als bei den weiter oben beschriebenen Ausführungsbeispielen, wobei auch er eine Einführungsschräge 3 aufweist. Diese Form des Ventilsitzes 1 ist besonders für den Einbau in aus PE-Rohr bestehende Gasleitungen, wie sie andeutungsweise unter 26 der Fig. 7 dargestellt ist, geeignet. Die Sicherheitsschließvorrichtung wird hierbei montiert, indem zum Beispiel die aus PE-Rohr bestehende Gasleitung 26 erwärmt wird. Der nachgebende Teil ist in diesem Fall nicht der Ringsteg 2, sondern die Gasleitung 26.

Der Ventilkörper besteht aus einem auf der Feder 8 frei schwebenden Teller 18, der sich in Offenstellung gegen einen in radialer Richtung elastisch verformbaren Anschlag abstützt. Der Anschlag besteht in diesem Ausführungsbeispiel, wie aus Fig. 8 sehr gut zu erkennen ist, aus einer Spreizfeder 20, die in eine umlaufende Innennut 19 des Ventilsitzes 1 eingeschnappt ist.

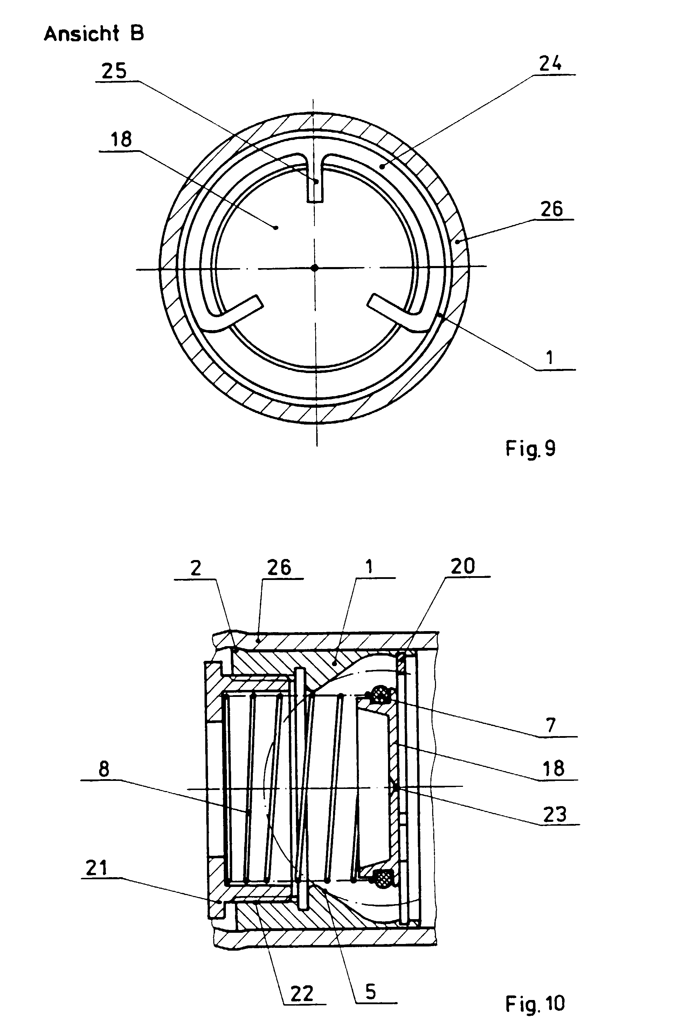

Es versteht sich, daß statt der Spreizfeder 20 auch anders geformte Anschläge verwendet werden können. So wird zum Beispiel in Fig. 9 der Anschlag durch einen geschlitzten Kreisring 24, der vorzugsweise drei auf dem Umfang gleichmäßig verteilte radial nach innen ragende Stege 25 aufweist, gebildet. Darauf zu achten ist nur, daß die den Strömungsquerschnitt verringernde Fläche des Anschlages möglichst klein gehalten wird.

Zum Erzielen der gewünschten Dichtheit dient ein auf dem Teller 18 befindlicher Rundring 7, während die Dichtfläche 5 des Ventilsitzes 1 wiederum in Form einer Hohlkugel ausgeführt ist.

Da es sich bei Gasleitungen aus PE-Rohr üblicherweise um erdverlegte Leitungen handelt, so daß die Sicherheitsschließvorrichtung nur schwer zugänglich ist, besitzt der Teller 18 eine Leckbohrung 23, die zu einem definierten und selbstredend zulässigen Leckfluß führt, wodurch nach dem Beheben einer Havarie, die zum Schließen der Sicherheitsschließvorrichtung geführt hat, diese wieder selbst öffnet.

In Fig. 10 ist die bereits in Fig. 7 beschriebene Sicherheitsschließvorrichtung dahingehend verändert, daß die als separates Teil ausgeführte Auflageschulter 21 über ein Gewinde 22 mit dem Ventilsitz 1 verbunden und somit in Achsrichtung stellbar ist. Damit wird eine Justierung ermöglicht, die ohne eine Veränderung des Strömungsquerschnittes auskommt.

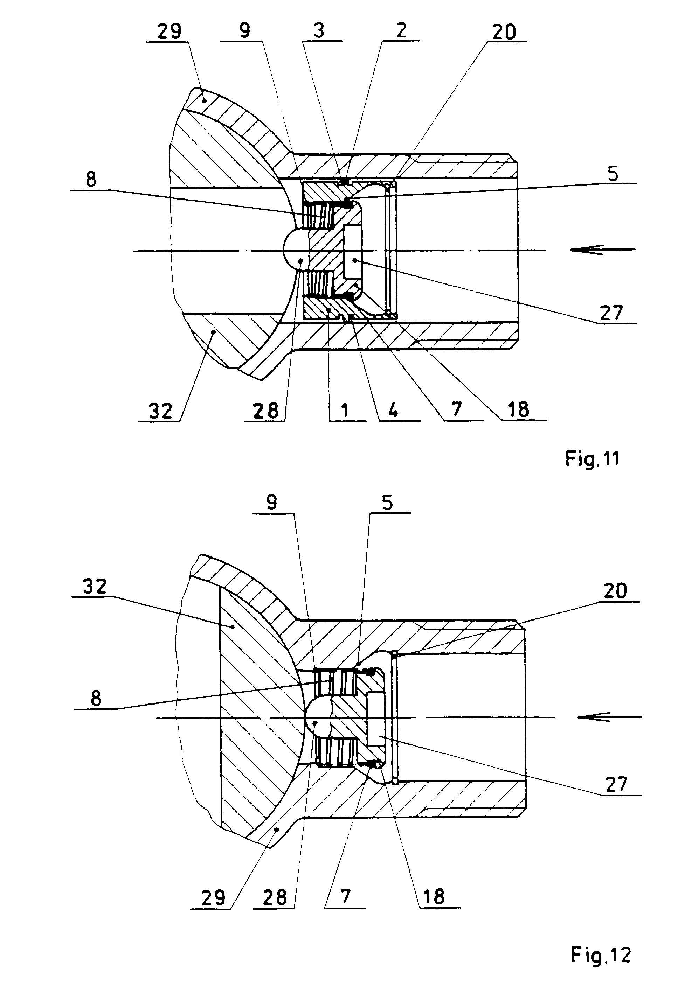

Die Verwendung einer erfindungsgemäßen Sicherheitsschließvorrichtung in Verbindung mit einem handelsüblichen Gasabsperrhahn 29 ist in den Figuren 11 und 12 dargestellt. Während in Fig. 11 die Sicherheitsschließvorrichtung in den Gaseingang des Gasabsperrhahnes 29 eingesetzt ist, ist in Fig. 12 der Ventilsitz 1 einstückig mit dem Gaseingang des Gasabsperrhahnes 29 ausgeführt. Bei beiden Ausführungen weist der Teller 18 der Sicherheitsschließvorrichtung an seiner der Feder 8 zugewandten Seite in axialer Richtung einen zapfenförmigen Fortsatz 28 auf, der bei gescnlossener Sicherheitsschließvorrichtung (Fig. 11) aus derselben hervorragt, sich hingegen bei Offenstellung der Sicherheitsschließvorrichtung innerhalb derselben befindet. Dabei ist die Sicherheitsschließvorrichtung so weit im Gaseingang angeordnet, daß der zapfenförmige Fortsatz 28 bei geschlossener Sicherheitsschließvorrichtung in den Schwenkbereich des Schließorgans 32 des Gasabsperrhahnes 29 hineinragt. Mit Schließen des Gasabsperrhahnes 29, was üblicherweise bei Havarien erfolgt, wird der zapfenförmige Fortsatz 28, dessen Ende entsprechend ausgeformt ist, in Achsrichtung verschoben (Fig. 12), wodurch die Sicherheitsschließvorrichtung auf Grund der wirkenden Feder 8 wieder vollständig geöffnet wird, so daß das Gas nach dem nach Beseitigung der Havarie erfolgten Öffnen des Gasabsperrhahnes 29 wieder strömen kann.

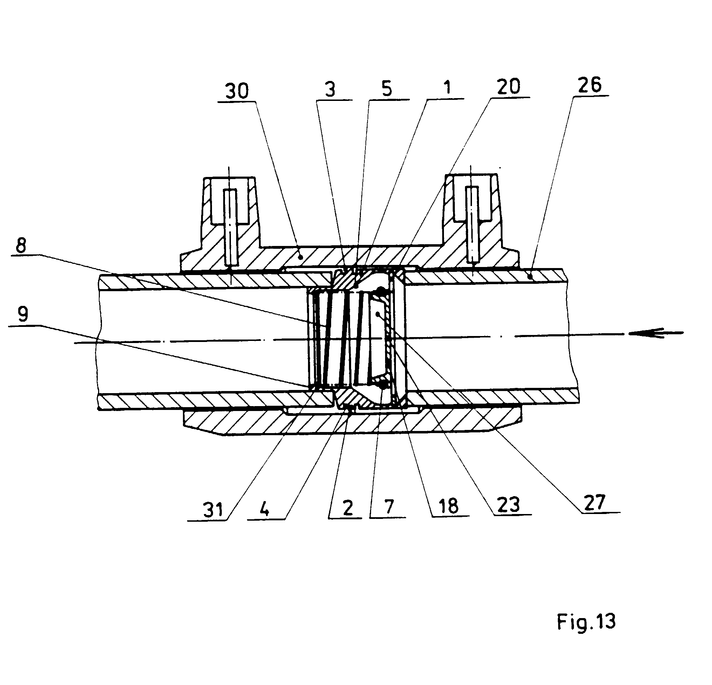

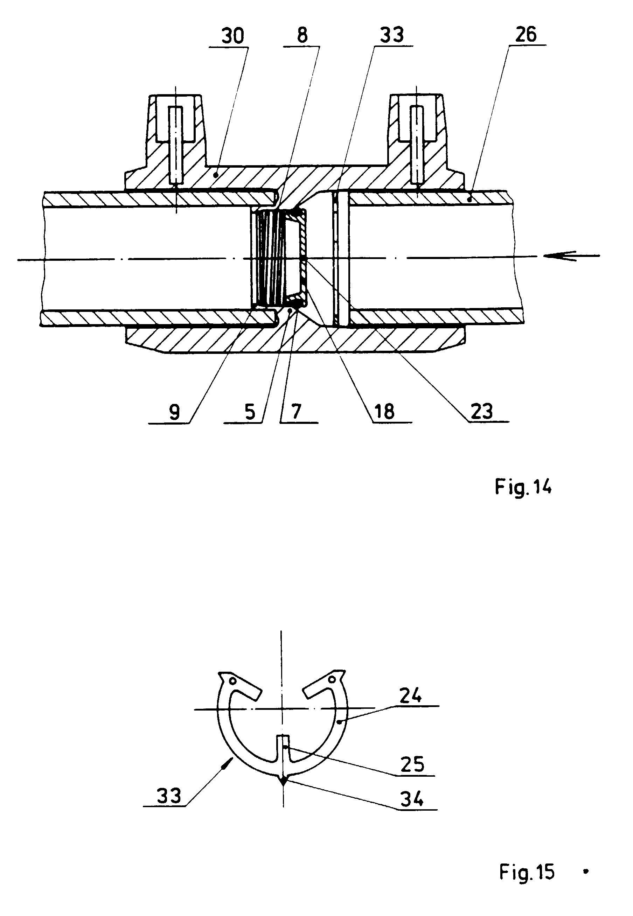

Bei aus PE-Rohr bestehenden Gasleitungen 26 erfolgt in vielen Fällen die Verbindung mittels sogenannter Elektroschweißmuffen 30. Eine für diesen Fall vorteihafterweise vorgesehene Sicherheitsschließvorrichtung ist in den Figuren 13 und 14 dargestellt. Während in Fig. 13 die Sicherheitsschließvorrichtung in die Elektroschweißmuffe 30 eingesetzt ist, ist in Fig. 14 der Ventilsitz 1 einstückig mit derselben ausgeführt. Um den Anschlag 33 für den Teller 18 einfach zu realisieren, besitzt der in Fig. 9 sichtbare, als Anschlag dienende Kreisring 24. zusätzlich zu den Stegen 25 auf dem äußeren Umfang verteilte Zacken 34, die sich in die Elektroschweißmuffe 30 hineindrücken.

Wie aus beiden Figuren zu ersehen ist, kann der Innendurchmesser der Sicherheitsschließvorrichtung vergrößert werden, da sie sich außerhalb der Gasleitung 26 befindet, wodurch der durch die Sicherheitsschließvorrichtung hervorgerufene Druckverlust minimiert werden kann.

Um die Baulängenvergrößerung, die nötig ist, um die an ihren beidseitigen Enden gebrauchte Schweißlänge zur Verbindung mit der Gasleitung 26 zu gewährleisten. gering zu halten. ist es von Vorteil, wenn die Sicherheitsschließvorrichtung an ihrem abströmseitigen Ende, dessen Strömungsquerschnitt ansonsten größer als der Strömungsquerschnitt im Tellerbereich ist, einen abgesetzten Bund 31 aufweist, wobei der Außendurchmesser des Bundes 31 kleiner als der Innendurchmesser der Gasleitung 26 ist.

Es versteht sich, daß die in diesem Abschnitt beschriebenen einzelnen Ausführungen keinen Anspruch auf Vollständigkeit erheben. So ist es zum Beispiel möglich, daß die einzelnen Elemente der weiter oben aufgeführten Beispiele untereinander ausgetauscht werden können, ohne daß der beanspruchte Schutzbereich verlassen wird.

### Bezugszeichen

- 1: Ventilsitz
- 2: Ringsteg
- 3: Einführungsschräge
- 4: Rille
- 5: Dichtfläche
- 6: Ventilkörper
- 7: Abdichtelement
- 8: Feder
- 9: Schulter
- 10: Bund
- 11: Zapfen
- 12: Durchgangsbohrung
- 13: Sperrelement
- 14: Endstück
- 15: Drahtbügel
- 16: Bohrung
- 17: PTFE-Band
- 18: Teller
- 19: Nut
- 20: Spreizfeder
- 21: Auflageschulter
- 22: Gewinde
- 23: Leckbohrung
- 24: Kreisring
- 25: Steg
- 26: Gasleitung
- 27: Ausdrehung
- 28: Fortsatz
- 29: Gasabsperrhahn
- 30: Elektroschweißmuffe
- 31: Bund
- 32: Schließorgan
- 33: Anschlag

## Patentansprüche

1. Sicherheitsschließvorrichtung für Gasleitungen mit einem Ventilkörper (6), der gegen einen Ventilsitz (1) preßbar ist, wobei der Ventilkörper (6), der nur durch eine Feder (8) geführt und ansonsten ohne zusätzliche Lagerstelle frei beweglich ist, und der in Achsrichtung des Ventilsitzes (1) entgegen der Kraft der Feder (8) in Schließrichtung verschiebbar ist, dadurch gekennzeichnet, daß der Ventilkörper (6) ein auf der Feder (8) frei schwebender Teller (18) ist, der sich in Offenstellung gegen einen in radialer Richtung elastisch verformbaren Anschlag abstützt, der in eine Nut (19) eingeschnappt ist, die vorzugsweise einstückig mit dem Ventilsitz (1) verbunden ist.

2. Sicherheitsschließvorrichtung für Gasleitungen nach Patentanspruch 1, dadurch gekennzeichnet, daß der Anschlag durch eine Spreizfeder (20) gebildet wird.

3. Sicherheitsschließvorrichtung für Gasleitungen nach Patentanspruch 1, dadurch gekennzeichnet, daß der Anschlag durch einen geschlitzten Kreisring (24), der vorzugsweise drei auf dem Umfang gleichmäßig verteilte radial nach innen ragende Stege (25) aufweist, gebildet wird.

4. Sicherheitsschließvorrichtung für Gasleitungen nach einem der Patentansprüche 1 bis 3, dadurch gekennzeichnet, daß eine Auflageschulter (21) für das dem Ventilkörper (6) abgewandte Ende der Feder (8) in Achsrichtung stellbar ist, indem sie vorzugsweise mittels eines Gewindes (22) mit dem Ventilsitz (1) verbunden ist.

5. Sicherheitsschließvorrichtung für Gasleitungen nach einem der Patentansprüche 1 bis 4, dadurch gekennzeichnet, daß der Teller (18) an seiner der Feder (8) zugewandten Seite in axialer Richtung einen zapfenförmigen Fortsatz (28) aufweist, der bei geschlossener Sicherheitsschließvorrichtung aus derselben hervorragt, sich hingegen bei Offenstellung der Sicherheitsschließvorrichtung innerhalb derselben befindet.

6. Sicherheitsschließvorrichtung für Gasleitungen nach Patentanspruch 5, dadurch gekennzeichnet, daß der Ventilsitz (1) einstückig mit dem Gaseingang eines an sich bekannten Gasabsperrhahnes (29) ausgeführt ist.

## Claims

1. Safety sealing device for gas pipes with a valve body (6), which can be pressed against a valve seat (1), whereby the valve body (6) which is guided only by a spring (8) and is otherwise freely moveable without additional support points, and is movable in the axial direction of the valve seat (1) is in the closure direction against the force of a spring (8), characterized by this means in that the valve body (6) is on the spring (8) of freely suspended plate (18) which rests in the open position on a circlip elastically deformable in the radial direction, which is itself latched into a notch (19), which is preferably connected in one piece with the valve seat (1).

2. Safety sealing device for gas pipes, according to patent claim 1, characterized by this means in that the circlip is formed by an expanding spring (20).

3. Safety sealing device for gas pipes, according to patent claim 1, characterized by this means in that the circlip is formed by a slit circular spring (24) which has three radial flanges (25) extending inwards distributed evenly around its circumference.

4. Safety sealing device for gas pipes, according to any of the patent claims 1 to 3, characterized by this means in that the circlip shoulder (21) for the end of the spring (8) facing the valve body (6) is adjustable in the axial direction in which, preferably, it is connected to the valve seat (1) by means of a thread (22).

5. Safety sealing device for gas pipes, according to any of the patent claims 1 to 4, characterized by this means in that the plate (18) has a lug-shaped extension (28) on its side facing spring (8) in the axial direction, which protrudes out of the safety sealing device in the closed position and which remains within the same in the open position.

6. Safety sealing device for gas pipes, according to patent claim 5, characterized by this means in that the valve seat (1) is constructed in one-piece with the gas inlet of a known gas stopcock (29).

## Revendications

1. Dispositif de fermeture de sécurité pour canalisations de gaz comportant un corps de soupape (6) pouvant être pressé contre un siège de soupape (1), le corps de soupape (6) étant seulement guidé par un ressort et autrement à mouvement libre sans point d'appui supplémentaire et pouvant être déplacé dans le sens de l'axe du siège de soupape (1) contrairement à la force du ressort (8) dans la direction de fermeture, caractérisé en ce que le corps de soupape (6) est un plateau (18) flottant librement sur le ressort (8) qui s'appuie en position d'ouverture contre une butée se déformant élastiquement en sens radial qui est encliquetée dans une rainure (19) qui est liée de préférence par une pièce avec le siège de soupape (1).

2. Dispositif de fermeture de sécurité pour canalisations de gaz selon la revendication 1, caractérisé en ce que la butée est constituée par un ressort à expansion (20).

3. Dispositif de fermeture de sécurité pour canalisations de gaz selon la revendication 1, caractérisé en ce que la butée est constituée par un anneau de cercle fendu (24) qui comporte de préférence trois barrettes (25) régulièrement réparties sur la circonférence et dirigées radialement vers l'intérieur.

4. Dispositif de fermeture de sécurité pour canalisations de gaz selon une des revendications 1 à 3, caractérisé en ce qu'une épaule d'appui (21) pour l'extrémité du ressort (8) qui est opposée au corps de soupape (6) est ajustable dans le sens de l'axe en la liant de préférence moyennant un filetage (22) avec le siège de soupape (1).

5. Dispositif de fermeture de sécurité pour canalisations de gaz selon une des revendications 1 à 4, caractérisé en ce que le plateau (18) comporte sur son côté faisant face au ressort (8) en direction axiale un prolongement en forme de tenon (28) saillant du dispositif de fermeture de sécurité en position de fermeture, mais se trouvant à l'intérieur de celui-ci en position d'ouverture.

6. Dispositif de fermeture de sécurité pour canalisations de gaz selon la revendication 5, caractérisé en ce que le siège de soupape (1) est exécuté en une pièce avec l'entrée de gaz d'un robinet de fermeture de gaz (29) qu'on connaît normalement.
